# FASCICULE DE BREVET EUROPEEN

(11) **EP 3 331 725 B1**
(45) Date de publication et mention de la délivrance du brevet: **22.04.2020**
(21) Numéro de dépôt: 16754439.4
(22) Date de dépôt: 04.08.2016
(51) Int. Cl.: B60N 2/68, B60N 2/427, B64D 11/06

(54) **SIEGE DEFORMABLE POUR VEHICULE**
VERFORMBARES FAHRZEUGSITZ
DEFORMABLE VEHICLE SEAT

(30) Priorité: 05.08.2015 FR 1557556
(43) Date de publication de la demande: 13.06.2018
(73) Titulaire: Expliseat, 75011 Paris (FR)
(72) Inventeur: SAADA, Benjamin, 75001 Paris (FR); TEJEDOR, Vincent, 92130 Issy les Moulineaux (FR)
(74) Mandataire: Brevalex
(86) Numéro de dépôt international: PCT/EP2016/068627
(87) Numéro de publication internationale: WO 2017/021485

(56) Documents cités:
- WO-A1-2012/002195
- JP-A- H11 278 128
- JP-B2- 5 032 399
- US-A1- 2009 084 925

## Description

### Domaine de l'invention

L'invention concerne les sièges de véhicules, notamment d'aéronefs, de préférence multiplaces et devant pouvoir se déformer dans certaines conditions.

### Art antérieur et problème posé

Les sièges de moyens de transport, tels que le siège d'aéronef divulgué dans le document US 2009/0084925, sont soumis à des essais drastiques pour garantir la sécurité des passagers transportés, notamment en cas de chocs du véhicule. Des tests doivent évaluer, d'une part, leur résistance à des essais de déplacements imposés, et d'autre part leur résistance à des essais à force imposée. Les déplacements imposés durant ces tests nécessitent une structure relativement flexible du siège. Par contre, la force imposée nécessite une structure plutôt rigide, car le déplacement maximal pour cette sollicitation est limité, afin de permettre l'évacuation des passagers après un éventuel crash ou accident.

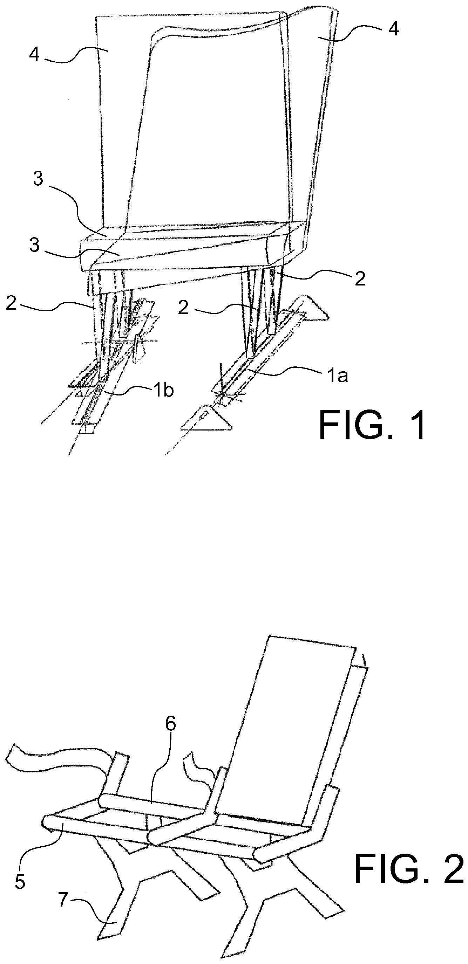

La figure 1 montre le déplacement imposé au siège pendant ce type de tests. Les rails 1A et 1B du siège, étant fixés au plancher du véhicule, subissent, pendant le test, une rotation de 10° vers le bas, en « pitch », c'est-à-dire en tangage, et de 10° vers le côté, en « roll », c'est-à-dire en roulis. Ces deux mouvements contraignent le siège à se déformer de façon importante, comme le montrent les deux positions différentes de chaque élément du siège, à savoir les deux rails 1A et 1B, les quatre pieds 2 de l'assise 3 et le dossier 4. On comprend que, si la structure du siège est trop rigide, elle rompt avant d'atteindre la déformation imposée par le test. On constate que l'assise 3 et le dossier 4, non seulement se déplacent, mais se déforment par rapport à leur forme initiale.

On signale qu'un deuxième essai consiste à tirer sur le siège avec un mannequin, avec une accélération imposée pour essayer de simuler le comportement du corps d'un passager attaché sur le siège, lors d'un accident. La masse du mannequin étant constante, l'accélération imposée se traduit par une force imposée au niveau des points d'accrochage de la ceinture de sécurité sur le siège. Les tests poussent cette accélération jusqu'à 16 g, c'est-à-dire 16 fois l'accélération de l'apesanteur, avec un mannequin de 80 kg, conduisant ainsi à une force de 1280 kg, ou 12.8 kN. A l'issue de ce test, le siège ne doit pas avoir eu de déplacement trop important vers l'avant, pour permettre une évacuation facile de l'aéronef.

Ces deux essais requièrent ainsi des propriétés contradictoires pour le siège. L'essai à déformation imposée nécessite une structure flexible, tandis que l'essai avec une force imposée nécessite une structure rigide, qui ne doit donc pas se déplacer trop à force imposée.

En référence à la figure 2, une solution actuelle consiste à utiliser à l'avant et à l'arrière du siège des barres avant 5 et arrière 6, parallèles l'une à l'autre pour délimiter l'assise du siège. Ces barres avant 5 et arrière 6 sont constituées de cylindres creux en métal de faible épaisseur. Elles sont dimensionnées pour présenter un moment d'inertie important, de par leur grand diamètre, afin de se déformer le moins possible lors du test à force imposée. D'autre part, cette forme de grand diamètre et de faible épaisseur permet de s'ovaliser à faible force, afin que le siège se déforme à faible force, lors du test à déplacement imposé. On remarque que, dans cette solution d'un siège à deux places, les pieds 7 sont fixés à l'ossature du siège et notamment de l'assise, plus précisément aux barres avant 5 et arrière 6, mais au milieu de l'assise.

Cette solution est relativement simple à mettre en œuvre, mais reste relativement lourde car les barres avant 5 et arrière 6 doivent combiner deux sollicitations contradictoires, à savoir une grande flexibilité et une grande rigidité.

Le but de l'invention est de remédier à ces inconvénients en présentant un siège de faible poids et susceptible de passer avec succès les tests décrits dans les paragraphes précédents.

### Objet de l'invention

Le principe de base, selon l'invention, pour résoudre ce problème est d'adapter la rigidité des barres avant et arrière sur plusieurs parties. Ainsi, les différentes parties de chaque barre avant et arrière vont répondre à l'exigence de flexibilité et l'exigence de rigidité.

L'objet principal de l'invention est donc un siège pour véhicule comprenant au moins une assise, une barre avant et une barre arrière supportant l'assise.

Selon l'invention, les barres avant et arrière comportent au moins une partie d'extrémité positionnée d'au moins un côté de la partie centrale, la partir centrale d'au moins une des barres avant ou arrière présentant une flexibilité plus importante que la section moyenne de la ou des parties d'extrémités grâce à une section tubulaire au moins en partie à épaisseur réduite par rapport à la section moyenne de la ou des parties d'extrémités, la ou les parties d'extrémités étant plus rigides que la partie centrale.

Dans la réalisation principale de l'invention, la ou les parties d'extrémités ont une épaisseur croissante de l'extérieur du siège vers la partie centrale d'assise placé au-dessus d'un pied.

Dans ce cas, la ou les parties d'extrémité sont de préférence tubulaires à épaisseur croissante depuis l'extrémité du siège vers la partie centrale.

De préférence, le diamètre extérieur de la ou les parties d'extrémités est égal au diamètre intérieur de la partie centrale, la ou les parties d'extrémité sont encastrées dans la partie centrale.

De préférence, la partie centrale est constituée d'un matériau du groupe comprenant la matière plastique déformable et le métal.

Dans les réalisations préférentielles de l'invention, la ou les parties d'extrémités sont constituées d'un matériau du groupe comprenant les matériaux composites à base de fibres de carbone, de fibres de verre, ou un métal.

Dans une réalisation du siège selon l'invention, il y a trois assises, une assise centrale supportée par les parties centrales des barres avant et arrière, et deux assises d'extrémités supportées par les parties d'extrémités des barres avant et arrière, au moins un pied se trouvant aux deux interfaces des parties centrales et de leurs deux parties d'extrémités correspondantes.

Dans une autre réalisation du siège selon l'invention, l'assise est unique le siège n'ayant qu'une seule place.

Dans une autre réalisation du siège selon l'invention, le siège possède deux assises pour présenter deux places, au moins un pied se trouvant aux deux interfaces des parties centrales et de leurs deux parties d'extrémités correspondantes.

Dans une autre réalisation du siège selon l'invention, il possède deux assises pour présenter deux places, une assise centrale et une assise d'extrémité, un pied se trouvant au niveau du milieu de l'assise d'extrémité (11) l'autre se trouvant au niveau du côté opposé de l'assise centrale.

Dans une autre réalisation du siège selon l'invention, il présente quatre places avec deux assises centrales supportées par les parties centrales des barres avant et arrière, et deux assises d'extrémités supportées par les parties d'extrémités des barres avant et arrière, au moins un pied se trouvant aux deux interfaces des parties centrales et de leurs deux parties d'extrémités correspondantes.

### Liste des figures

L'invention et ses différentes caractéristiques techniques seront mieux comprises à la lecture de la description suivante d'une réalisation privilégiée de l'invention, accompagnée de quelques figures représentant respectivement :
- figure 1, un siège de véhicule soumis à des tests que doit subir le siège selon l'invention ;
- figure 2, un siège à deux places de l'art antérieur ;
- figure 3, un schéma relatif à une réalisation principale du siège selon l'invention dans le cas où il comporte trois places ;
- figure 4, un schéma mécanique relatif aux contraintes dans une barre de la partie d'extrémité d'assise du siège selon l'invention ;
- figure 5, une réalisation préférentielle de cette barre de la partie d'extrémité d'assise du siège selon l'invention ;
- la figure 6, les trois parties d'une barre avant ou arrière du siège selon l'invention comprenant les parties d'extrémité d'assise et la partie centrale d'assise ; et
- la figure 7, une réalisation d'une barre avant ou arrière du siège selon l'invention, après son assemblage.

### Description détaillée d'une réalisation de l'invention

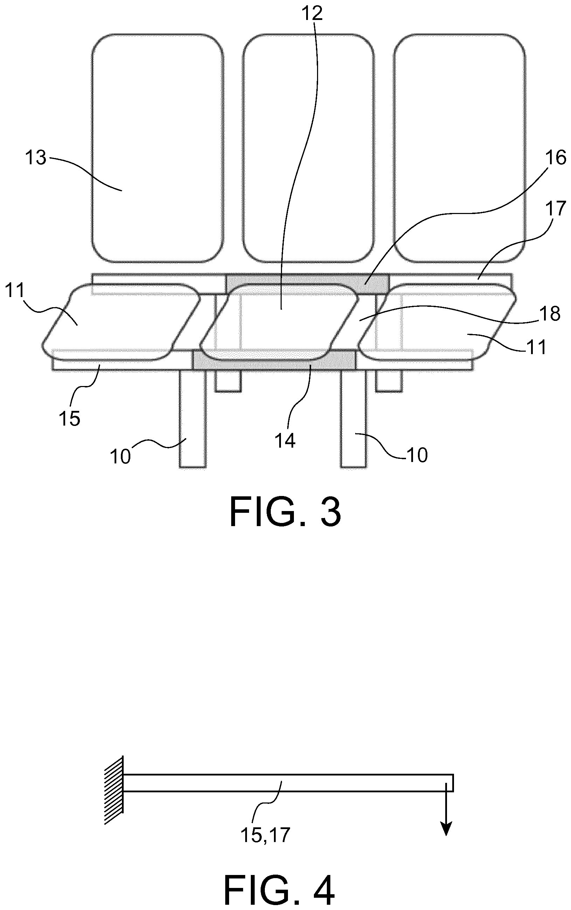

En référence à la figure 3, une réalisation envisagée du siège selon l'invention comporte trois places. Ce siège est composé de quatre pieds 10, plus ou moins verticaux, et qui sont reliés à deux barres latérales 18 qui entourent une assise centrale 12. Deux assises d'extrémité 11 entourent l'assise centrale 12. Trois dossiers 13 complètent les trois places formées par les trois assises, une assise centrale 12 et deux assises d'extrémité 11.

La structure du siège selon l'invention se complète d'une barre avant et d'une barre arrière qui supporte les assises d'extrémité 11 et l'assise centrale 12. Selon l'invention, ces barres avant et arrière sont constituées de trois parties. Elles possèdent chacune une partie centrale 14 et 16, chacune entourée ou prolongée par des parties d'extrémité 15 et 17. Au moins une partie centrale 14 ou 16, mais de préférence les deux parties centrales 14 et 16 présentent une flexibilité plus importante que les autres parties de la structure, notamment les barres latérales 18 et les parties d'extrémités 15 et 17. Pour obtenir cette flexibilité, ces parties centrales 14 et 16 ont une section tubulaire d'épaisseur réduite par rapport à la section moyenne des parties d'extrémité 15 et 17. Par contre, leur diamètre extérieur n'est pas inférieur. De préférence, il est même supérieur au diamètre extérieur des parties d'extrémité 15 et 17.

Comme on peut le constater sur la figure 3, les assises d'extrémité 11 sont en porte-à-faux par rapport aux pieds 10 du siège. Il convient donc que les parties d'extrémité 15 et 17 aient une grande rigidité. Pour ce faire, et en référence à la figure 4, ces parties d'extrémité 15 et 17 ont une épaisseur croissante, si on part de l'extrémité du siège en allant vers le point d'ancrage de ces parties d'extrémité 15 et 17 sur les barres latérales 18 et les pieds 10. En d'autres termes, le cas de la charge des assises d'extrémité 11 correspond à une flexion semi-encastrée, comme illustré par la figure 4. Pour maximiser la rigidité de ces parties d'extrémités 15 et 17, dont on a fixé au préalable la masse, l'épaisseur de ces parties d'extrémités 15 et 17 doit être linéairement croissante avec un profil imposé entre l'extrémité distale et le point d'encastrement. Ainsi, ces parties d'extrémités 15 et 17 sont très fines à l'extérieur du siège et très épaisses à leur point d'encastrement.

Cette solution technique permet aux barres avant et arrière d'être flexibles entre les points d'ancrage au sol, réalisés par les pieds 10 et rigide au-delà. On note que lorsque les pieds 10 sont rigidement liés au sol, la rigidité des parties centrales 14 et 16 des barres avant et arrière n'a pas d'influence sur la rigidité de l'ensemble de la structure du siège, car les efforts sont repris directement par les pieds 10. Les parties centrales 14 et 16 sont donc flexibles et peuvent être déformées entre leurs deux extrémités. Les parties d'extrémité 15 et 17 des barres avant et arrière peuvent résister ainsi à un effort à leur extrémité.

L'épaisseur du tube constituant les parties centrales 14 et 16 est définie pour permettre l'assise d'un passager relativement lourd.

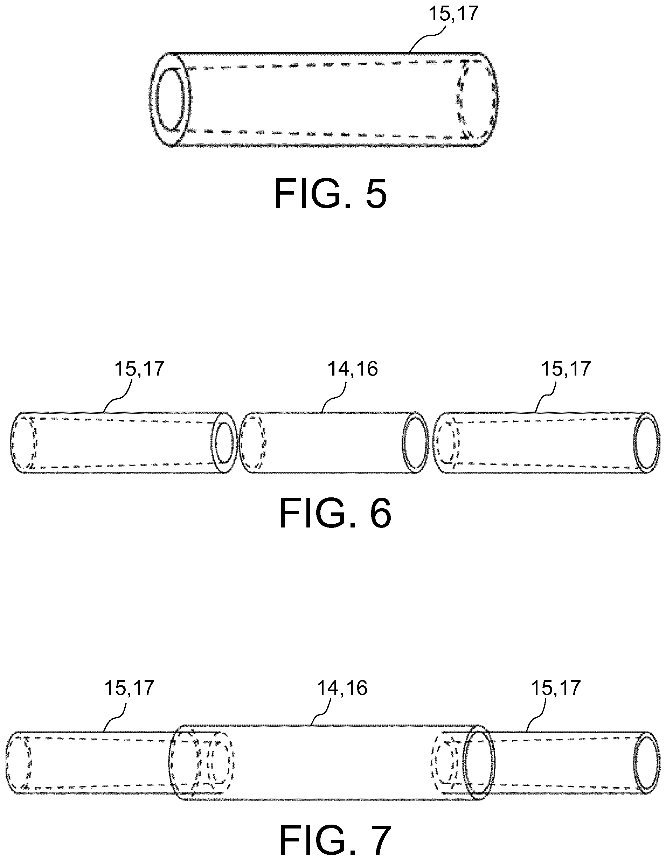

La figure 5 illustre une réalisation de ces parties d'extrémités 15 et 17 optimisées en rigidité. Le diamètre extérieur est fixe sur toute la longueur pour que l'interface avec le passager soit lisse. De son côté, le diamètre intérieur évolue pour faire varier l'épaisseur.

En référence à la figure 6, si on considère une barre avant ou une barre arrière démontée, on obtient donc deux parties d'extrémité 15 ou 17 entourant une partie centrale 14 ou 16.

La figure 7 montre une barre avant ou arrière montée. Il faut signaler que les pieds sont supposés être infiniment rigides et doivent permettre un encastrement parfait. En pratique, les pieds 10 sont soumis à des moments très importants, et doivent, par conséquent, être surdimensionnés. Pour limiter les moments subis par les pieds 10, on considère que ceux-ci jouent le rôle, non pas d'encastrement, mais d'un simple support. Cela nécessite de connecter les différentes barres avant et arrière précédemment définies pour avoir des moments faibles, voire nuls au niveau de l'interface avec les pieds 10. Pour obtenir ceci, on renforce la rigidité des barres avant et arrière en pratiquant un encastrement ou un recouvrement des parties d'extrémité 15 et 17 dans ou sur les parties centrales 14, 16. Cet encastrement correspond à l'endroit de liaison avec les pieds 10. Ceci limite les moments subis par les pieds 10. Bien entendu, dans ce cas, le diamètre intérieur des parties centrales 14, 16 correspond au diamètre extérieur des parties d'extrémité 15 ou 17 pour permettre un encastrement à force ou serré.

Le lissage des moments le long de l'ensemble des barres avant ou arrière évite de solliciter les pieds en moment et permet de se limiter à une sollicitation en force dans l'axe des sollicitations. En effet, lors d'un essai mécanique, les efforts exercés sur les barres avant ou arrière conduisent à des moments faibles ou nuls au niveau des interfaces avec les pieds 10 et l'effort résultant se limite à l'effort appliqué globalement à la structure, par conservation des forces appliquées. En l'absence de ce lissage des moments, c'est-à-dire dans l'hypothèse où des moments sont appliqués au niveau des interfaces, les pieds 10 subissent en plus de l'effort appliqué globalement à la structure l'effort nécessaire pour maintenir alignées deux parties de barres disjointes.

En fonction de la longueur de recouvrement entre les différente barres avant et arrière de partie centrale ou de parties d'extrémités, un arbitrage peut être obtenu entre la masse et la rigidité des barres avant ou arrière de parties d'extrémités ou entre la masse et la flexibilité des barres avant ou arrière de partie centrale. Le recouvrement des différentes parties des barres est une réalisation du lissage des moments sur les barres avant ou arrière.

La connexion entre les différentes parties de barres se fait au moyen de rivets, de collage ou de soudage, selon la matière utilisée.

Dans les réalisations techniques possibles des barres avant et arrière, les barres avant et arrière de partie centrale 14, 16 ont besoin, pour leur utilisation, d'être des formes très déformables, et donc de disposer d'une phase plastique. On peut utiliser comme matériaux des matières plastiques déformables ou un métal. Concernant les barres avant et arrière de parties d'extrémités, elles ont besoin d'être très rigides et n'ont pas besoin d'être déformables. Les matériaux pouvant constituer ces barres avant et arrière de parties d'extrémités 15, 17 peuvent être des matériaux composites, des matériaux purement élastiques, c'est-à-dire ne disposant pas d'une phase de déformation plastique (matériaux dits « fragiles »), par exemple à base de fibres de carbone ou à base de fibres de verre. Un métal peut également être utilisé.

La réalisation décrite précédemment est relative au siège représenté à la figure 3 et n'est donc qu'un exemple de réalisation. En effet, on peut envisager l'éventualité de réaliser un siège à une place en ne prenant que les éléments relatifs à la place centrale du siège représenté à la figure 3 avec des barres avant et arrière de partie centrale flexibles.

On peut même envisager un siège à quatre places, en doublant la place centrale de la figure 3, les pieds 10 entourant l'ensemble de deux places centrales.

On peut envisager un siège à deux places non symétrique, avec une assise centrale et une assise d'extrémité. Au moins un pied se trouve sur le côté de la partie centrale opposé à l'assise d'extrémité, l'autre se trouvant au niveau du milieu de l'assise d'extrémité. Ainsi, la partie d'extrémité des barres avant et arrière n'occupe qu'une partie du côté de l'assise d'extrémité.

On pourrait même envisager un siège à deux places avec les quatre pieds aboutissant au milieu de chacune des deux places, sur les barres avant et arrière. Dans ce cas, la partie centrale de chaque barre avant et arrière, de grande flexibilité correspondra alors à deux des demi-places de ce siège biplace. Dans ce cas, des parties d'extrémités des barres avant et arrière correspondant chacune à des moitiés d'extrémités des assises de ces deux places.

## Revendications

1. Siège pour véhicule comprenant au moins une assise, une barre avant et une barre arrière supportant l'assise,
**caractérisé en ce que**
les barres avant et arrière comportent chacune au moins une partie d'extrémité (15 ou 17) positionnées d'au moins un côté d'une partie centrale (14 ou 16),
la partie centrale (14 ou 16) d'au moins une des barres avant ou arrière présentant une flexibilité plus importante que la ou les deux parties d'extrémités (15 ou 17) grâce à une section tubulaire ayant au moins en partie une épaisseur réduite par rapport à la section moyenne de la ou des parties d'extrémités (15 ou 17),
la ou les parties d'extrémités (15, 17) étant plus rigides que la partie centrale (14 ou 16).

2. Siège selon la revendication 1, **caractérisé en ce que** la ou les parties d'extrémités (15,17) ont une épaisseur croissante de l'extérieur du siège vers la partie centrale (14,16) d'assise placé au-dessus d'un pied (10).

3. Siège selon la revendication 2, **caractérisé en ce que** la ou les barres d'extrémités (15,17) sont tubulaires à épaisseur croissante depuis l'extrémité du siège vers la partie centrale (14 ou 16).

4. Siège selon la revendication 3, **caractérisé en ce que** le diamètre extérieur de la ou les parties d'extrémités (15,17) est égal au diamètre intérieur de la partie centrale (14,16), la ou les parties d'extrémités (15,17) sont encastrées dans la partie centrale (14,16).

5. Siège selon la revendication 1, **caractérisé en ce que** la partie centrale (14,16), est constituée d'un matériau du groupe comprenant la matière plastique déformable et le métal.

6. Siège selon la revendication 1, **caractérisé en ce que** la ou les parties d'extrémités (15,17) sont constituées d'un matériau du groupe comprenant les matériaux composites à base de fibres de carbone, de fibres de verre, ou un métal.

7. Siège selon la revendication 1, **caractérisé en ce qu'**il y a trois assises, une assise centrale (12) supportée par les parties centrales (14,16) des barres avant et arrière, et deux assises d'extrémités (11) supportées par les parties d'extrémités (15,17) des barres avant et arrière, au moins un pied (10) se trouvant aux deux interfaces des parties centrales (14, 16) et de leurs deux parties d'extrémités (15, 17) correspondantes.

8. Siège selon la revendication 1, **caractérisé en ce que** l'assise est unique le siège n'ayant qu'une seule place.

9. Siège selon la revendication 1, **caractérisé en ce qu'**il possède deux assises pour présenter deux places, au moins un pied (10) se trouvant à l'interface des parties centrales (14, 16) et de leurs deux parties d'extrémités (15, 17) correspondantes.

10. Siège selon la revendication 1, **caractérisé en ce qu'**il possède deux assises pour présenter deux places, une assise centrale et une assise d'extrémité, un pied (10) se trouvant au niveau du milieu de l'assise d'extrémité (11) l'autre se trouvant au niveau du côté opposé de l'assise centrale.

11. Siège selon la revendication 1, **caractérisé en ce qu'**il présente quatre places avec deux assises centrales supportées par les parties centrales (14,16) des barres avant et arrière, et deux assises d'extrémités (11) supportées par les parties d'extrémités (15,17) des barres avant et arrière, au moins un pied (10) se trouvant aux deux interfaces des parties centrales (14, 16) et de leurs deux parties d'extrémités (15, 17) correspondantes.

## Patentansprüche

1. Sitz für ein Fahrzeug, umfassend mindestens ein Sitzelement, eine vordere Stange und eine hintere Stange, die das Sitzelement tragen,
**dadurch gekennzeichnet, dass**
die vordere und hintere Stange jeweils mindestens einen Endteil (15 oder 17) aufweisen, der auf mindestens einer Seite von einem Mittelteil (14 oder 16) angeordnet ist,
wobei der Mittelteil (14 oder 16) mindestens einer von der vorderen oder hinteren Stange eine größere Flexibilität aufweist als der Endteil oder die zwei Endteile (15 oder 17), und zwar aufgrund eines rohrförmigen Abschnitts, der mindestens teilweise eine reduzierte Dicke im Vergleich zu dem mittleren Abschnitt des Endteils oder der Endteile (15 oder 17) aufweist,
wobei der Endteil oder die Endteile (15, 17) steifer ist bzw. sind als der Mittelteil (14 oder 16).

2. Sitz nach Anspruch 1, **dadurch gekennzeichnet, dass** der Endteil oder die Endteile (15, 17) eine von der Außenseite des Sitzes zum Mittelteil (14, 16) des Sitzelements hin zunehmende Dicke aufweist bzw. aufweisen, positioniert über einem Fuß (10).

3. Sitz nach Anspruch 2, **dadurch gekennzeichnet, dass** die Stange oder die Stangen an den Enden (15, 17) rohrförmig ist oder sind, mit zunehmender Dicke vom Ende des Sitzes zum Mittelteil (14 oder 16) hin.

4. Sitz nach Anspruch 3, **dadurch gekennzeichnet, dass** der Außendurchmesser des Endteils bzw. der Endteile (15, 17) gleich dem Innendurchmesser des Mittelteils (14, 16) ist, wobei der Endteil bzw. die Endteile (15, 17) in den Mittelteil (14, 16) eingebettet ist bzw. sind.

5. Sitz nach Anspruch 1, **dadurch gekennzeichnet, dass** der Mittelteil (14, 16) aus einem Material aus der Gruppe hergestellt ist, welche verformbaren Kunststoff und Metall umfasst.

6. Sitz nach Anspruch 1, **dadurch gekennzeichnet, dass** der Endteil oder die Endteile (15, 17) aus einem Material aus der Gruppe besteht bzw. bestehen, die Verbundwerkstoffe auf der Basis von Kohlefasern, Glasfasern oder Metall umfasst.

7. Sitz nach Anspruch 1, **dadurch gekennzeichnet, dass** es drei Sitzelemente gibt, ein mittleres Sitzelement (12), das von den Mittelteilen (14, 16) der vorderen und hinteren Stange getragen wird, und zwei End-Sitzelemente (11), die von den Endteilen (15, 17) der vorderen und hinteren Stange getragen werden, wobei es mindestens einen Fuß (10) an beiden Schnittstellen der Mittelteile (14, 16) und ihrer entsprechenden zwei Endteile (15, 17) gibt.

8. Sitz nach Anspruch 1, **dadurch gekennzeichnet, dass** das Sitzelement ein Einzel-Sitzelement ist, wobei der Sitz nur einen Platz hat.

9. Sitz nach Anspruch 1, **dadurch gekennzeichnet, dass** er zwei Sitzelemente besitzt, um zwei Plätze aufzuweisen, wobei sich mindestens ein Fuß (10) an der Schnittstelle der Mittelteile (14, 16) und ihrer beiden entsprechenden Endteile (15, 17) befindet.

10. Sitz nach Anspruch 1, **dadurch gekennzeichnet, dass** er zwei Sitzelemente besitzt, um zwei Plätze aufzuweisen, ein mittleres Sitzelement und ein End-Sitzelement, wobei sich ein Fuß (10) auf der Höhe der Mitte des End-Sitelements (11) und der andere sich auf der Höhe der gegenüberliegenden Seite des mittleren Sitzelements befindet.

11. Sitz nach Anspruch 1, **dadurch gekennzeichnet, dass** er vier Plätze aufweist, mit zwei mittleren Sitzelementen, die von den Mittelteilen (14, 16) der vorderen und hinteren Stange getragen werden, und zwei End-Sitzelementen (11), die von den Endteilen (15, 17) der vorderen und hinteren Stange getragen werden, wobei mindestens ein Fuß (10) an den beiden Schnittstellen der Mittelteile (14, 16) und ihrer beiden entsprechenden Endteile (15, 17) angeordnet ist.

## Claims

1. A vehicle seat comprising at least one seat portion, a front bar and a rear bar supporting the seat portion,
**characterised in that**
the front and rear bars each include at least one end part (15 or 17) positioned on at least one side of a central part (14 or 16),
the central part (14 or 16) of at least one of the front or rear bars having a higher flexibility than the end part(s) (15 or 17) thanks to a tubular section having at least partly a reduced thickness with respect to the mean section of the end part(s) (15 or 17),
the end part(s) (15, 17) being more rigid than the central part (14 or 16).

2. The seat according to claim 1, **characterised in that** the end part(s) (15, 17) has (have) a thickness increasing from outside the seat to the central part (14, 16) of the seat portion placed above a leg (10).

3. The seat according to claim 2, **characterised in that** the end bar(s) (15, 17) is (are) tubular with a thickness increasing from the end of the seat to the central part (14 or 16).

4. The seat according to claim 3, **characterised in that** the external diameter of the end part(s) (15, 17) is equal to the internal diameter of the central part (14, 16), the end part(s) (15, 17) is (are) embedded in the central part (14,16).

5. The seat according to claim 1, **characterised in that** the central part (14, 16), consists of a material from the group comprising deformable plastic material and metal.

6. The seat according to claim 1, **characterised in that** the end part(s) (15, 17) consist(s) of a material from the group comprising composite materials based on carbon fibres, glass fibres, or a metal.

7. The seat according to claim 1, **characterised in that** there are three seat portions, a central seat portion (12) supported by the central parts (14, 16) of the front and rear bars, and two end seat portions (11) supported by the end parts (15, 17) of the front and rear bars, at least one leg (10) being located at both interfaces of the central parts (14, 16) and of both their corresponding end parts (15, 17).

8. The seat according to claim 1, **characterised in that** the seat portion is unique, the seat having only a single occupant.

9. The seat according to claim 1, **characterised in that** it has two seat portions to have two occupants, at least one leg (10) being located at the interface of the central parts (14, 16) and of both their corresponding end parts (15, 17).

10. The seat according to claim 1, **characterised in that** it has two seat portions to have two occupants, a central seat portion and an end seat portion, a leg (10) being located at the middle of the end seat portion (11), the other being located at the opposite side of the central seat portion.

11. The seat according to claim 1, **characterised in that** it has four occupants with two central seat portions supported by the central parts (14, 16) of the front and rear bars, and two end seat portions (11) supported by the end parts (15, 17) of the front and rear bars, at least one leg (10) being located at both interfaces of the central parts (14, 16) and of both their corresponding end parts (15, 17).
